# EUROPÄISCHE PATENTANMELDUNG

(11) **EP 4 606 742 A1**
(43) Veröffentlichungstag der Anmeldung: **27.08.2025**
(21) Anmeldenummer: 25150907.1
(22) Anmeldetag: 09.01.2025
(51) Int. Cl.: B65G 27/20, B02C 21/02, B02C 23/02, B07B 1/00

(54) **FÖRDEREINRICHTUNG FÜR EINE MATERIALVERARBEITUNGSANLAGE**

(30) Priorität: 22.02.2024 DE 102024105022
(71) Anmelder: KLEEMANN GMBH, 73037 Göppingen (DE)
(72) Erfinder: NÄGELE, Florian, 89185 Hüttisheim (DE)
(74) Vertreter: Herrmann, Jochen

(57) **Zusammenfassung**

Die Erfindung betrifft eine Fördereinrichtung für eine Materialverarbeitungsanlage (1) mit einer Förderanordnung, die eine Material-Förderstrecke bildet, wobei an die Förderanordnung eine Tragvorrichtung angekoppelt ist, wobei die Tragvorrichtung einen Schwingungserreger (14) mit zwei Erregereinheiten (14.1, 14.2), trägt, wobei die Erregereinheiten (14.1, 14.2) jeweils einen Erregermotor (50) aufweisen, der mit einem Motor-Rotor (52) jeweils wenigstens eine Unwuchtmasse antreibt, wobei die Erregereinheiten (14.1, 14.2) mittels eines Befestigungsabschnitts (14.5) an der Tragvorrichtung zur Schwingungsübertragung befestigt ist. Um bei einer solchen Fördereinrichtung eine baulich einfache Konstruktion und eine verbesserte Kraftableitung von dem Schwingungserreger in die Tragvorrichtung zu ermöglichen ist es erfindungsgemäß vorgesehen, dass die Motor-Statoren (51) der beiden Erregermotoren (50) mittels wenigstens einem Verbindungselement (14.7) miteinander verbunden sind, wobei das Verbindungselement (14.7) einen Überbrückungsbereich bildet, der den Abstandsbereich zwischen den Motor-Statoren (51) überbrückt.

## Beschreibung

Die Erfindung betrifft eine Fördereinrichtung für eine Materialverarbeitungsanlage mit einer Förderanordnung, die eine Material-Förderstrecke bildet, wobei an die Förderanordnung eine Tragvorrichtung angekoppelt ist, wobei die Tragvorrichtung einen Schwingungserreger mit zwei Erregereinheiten trägt, wobei die Erregereinheiten jeweils einen Erregermotor aufweisen, der mit einem Motor-Rotor jeweils wenigstens eine Unwuchtmasse antreibt und wobei die Erregereinheiten mittels eines Befestigungsabschnitts an der Tragvorrichtung zur Schwingungsübertragung befestigt ist.

Solche Materialverarbeitungsanlagen werden zu verschiedenen Zwecken eingesetzt. Sie dienen beispielsweise zum Zerkleinern und/oder Aussieben von Recycling- und/oder Gesteinsmaterial im Aufbereitungsprozess. Diese Maschinen lassen sich entweder als mobile oder als stationäre Anlagen einsetzen. Über eine Aufgabeeinheit wird zu brechendes Gut in die Materialverarbeitungsanlage eingefüllt. Hierzu werden üblicherweise Bagger eingesetzt. Der Bagger legt das zu brechende oder zu siebende Gut in der Förderanordnung, insbesondere einer Förderrinne, der Aufgabeeinheit ab. Ausgehend von der Aufgabeeinheit wird das zu bearbeitende Material längs einer Förderstrecke der Förderanordnung in Förderrichtung zu einer Sieb- oder Brecheinheit gefördert. Die Förderanordnung bewirkt dabei den Transport mittels motorisch angetriebener Erregereinheiten, die als Schwingungserreger oder Exzenter-Schwinger ausgebildet sind. Diese Erregereinheiten sind an eine Tragvorrichtung angeschlossen, die mit der Aufgabeeinheit in Verbindung steht. Die Schwingungserreger versetzen die Förderanordnung über die Tragvorrichtung derart in Schwingung, dass eine Förderwirkung in Förderrichtung, hin zu einer nachfolgenden Prozesseinheit, beispielsweise einer Siebeinheit oder einer Brecheinheit, erzielt wird. Aus DE 10 2019 115 871 A1 ist eine Fördereinrichtung für eine Materialverarbeitungsanlage bekannt, bei der ein Schwingungserreger über einen Träger an eine Aufgabeeinheit angekoppelt ist.

Während des Bearbeitungseinsatzes wirken sehr hohe Kräfte, die von dem Schwingungserreger in die Tragvorrichtung übertragen werden müssen. Um die Kräfte sicher zu übertragen, ist bei dieser bekannten Materialverarbeitungsanlage eine Trägerplatte vorgesehen, an die die Erregereinheiten jeweils mittels eines Befestigungsabschnitts angekoppelt sind. Die Trägerplatte muss entsprechend massiv dimensioniert werden, damit die Kräfte schadfrei übertragen werden können.

Es ist Aufgabe der Erfindung eine Fördereinrichtung der eingangs erwähnten Art bereitzustellen, die mit einer baulich einfachen Konstruktion eine verbesserte Kraftableitung von dem Schwingungserreger in die Tragvorrichtung ermöglicht.

Diese Aufgabe wird dadurch gelöst, dass die Motor-Statoren der beiden Erregermotoren mittels wenigstens einem Verbindungselement miteinander verbunden sind, wobei das Verbindungselement einen Überbrückungsabschnitt bildet, der den Abstandsbereich zwischen den Motor-Statoren überbrückt.

Gemäß der Erfindung werden die beiden Erregereinheiten nicht nur mittels des Befestigungsabschnitts an der Tragvorrichtung gehalten. Zusätzlich zu dem Befestigungsabschnitt wirkt das Verbindungselement, das mit einem Überbrückungsbereich die beiden Motor-Statoren miteinander verbindet. Der Überbrückungsbereich des Verbindungselements ist beabstandet von dem oder den Befestigungsabschnitt(-en) angeordnet. Infolge dieser Kopplung der beiden Motor-Statoren wird deren Relativbewegung zueinander unterbunden oder zumindest deutlich reduziert. Dadurch werden die Beanspruchungen in dem Bereich, in dem der oder die Befestigungsabschnitte an die Tragvorrichtung angeschlossen ist/sind, erheblich reduziert. Somit muss diese Befestigungsstelle nicht mehr so massiv dimensioniert werden, was eine leichtere und kostengünstigere Bauweise ermöglicht. Darüber hinaus erhöht sich mit dieser Lösung auch der Wirkungsgrad, da im Bereich der Befestigungsstelle durch die Kopplung der Motor-Statoren weniger Energie in Verformungsarbeit umgewandelt wird.

Gemäß einer Erfindungsvariante kann es vorgesehen sein, dass wenigstens eine der Rotationsachsen, vorzugsweise beide Rotationsachsen, der Motor-Rotoren zumindest abschnittsweise in dem zwischen dem Befestigungsabschnitt und dem Überbrückungsbereich des wenigstens einen Verbindungselements gebildeten Abstandsbereich angeordnet ist. Hierdurch wird eine besonders steife Bauweise ermöglicht.

Es kann auch zugunsten einer platzsparenden Bauweise vorgesehen sein, dass der Überbrückungsbereich des wenigstens einen Verbindungselements zumindest abschnittsweise im Bereich zwischen den Rotationsachsen der Motor-Rotoren angeordnet ist.

Eine besonders bevorzugte Erfindungsvariante kann dergestalt sein, dass die beiden Rotationsachsen der Motor-Rotoren im Bereich zwischen den beiden Befestigungsabschnitten angeordnet sind. Es hat sich gezeigt, dass mit dieser Bauweise besonders gute Förderwirkung auf der Förderstrecke erreicht werden kann.

Vorzugsweise kann es auch vorgesehen sein, dass die Rotationsachsen der beiden Erregereinheiten quer, insbesondere senkrecht, zur Förderrichtung (V) der Förderstrecke zueinander beabstandet angeordnet sind.

Eine mögliche Erfindungsvariante kann dergestalt sein, dass der Erregermotor wenigstens einer der Erregereinheiten zwei zueinander in Richtung der Rotationsachse des Motor-Rotors beabstandet angeordnete Unwuchtmassen antreibt, wobei der Motor-Rotor in Richtung der Rotationsachse zumindest bereichsweise zwischen den beiden Unwuchtmassen angeordnet ist. Durch diese Bauweise wird der Erregermotor der Erregereinheit zugunsten einer besseren Betriebssicherheit symmetrisch belastet.

Hierbei kann es vorzugsweise vorgesehen sein, dass die Projektion des Überbrückungsbereichs des wenigstens einen Verbindungselements in eine die Rotationsachse aufnehmende Ebene zumindest abschnittsweise im Bereich zwischen den beiden in Richtung der Rotationsachse zueinander beabstandeten Unwuchtmassen angeordnet ist.

Eine mögliche Erfindungsvariante kann dergestalt sein, dass die beiden Erregermotoren Elektromotoren sind, die jeweils unabhängig voneinander die ihnen jeweils zugeordnete wenigstens eine Unwuchtmasse antreiben. Es hat sich überraschenderweise gezeigt, dass sich die beide Erregermotoren selbsttätig synchronisieren, ohne dass es einer Kopplung der beiden Motor-Rotoren, beispielsweise mittels eines Getriebes bedarf.

Wenn vorgesehen ist, dass das wenigstens eine Verbindungselement Teil eines Gehäuses ist, in dem die beiden Erregermotoren zumindest bereichsweise untergebracht und gehalten sind, dann werden keine separaten Gehäuse benötigt, in denen die Erregermotoren einzeln untergebracht sind. Dies verringert den Teile- und Montageaufwand und verbesset gleichzeitig die Steifigkeit des Systems. Hierbei kann es insbesondere so sein, dass das Gehäuse die von den Unwuchtmassen beider Erregereinheiten erzeugten Kräfte aufnimmt.

Eine mögliche Erfindungsvariante kann so sein, dass die Tragvorrichtung zwei zueinander beabstandet angeordnete Halter aufweist, zwischen denen die beiden Erregereinheiten zumindest bereichsweise angeordnet sind und an denen der Schwingungserreger abgestützt, vorzugsweise befestigt, ist. Über die beiden im Abstand stehenden Halter wird ein Stützabstand geschaffen der eine bessere Übertragung der Vibrationsbewegungen ermöglicht. Dadurch, dass die Erregereinheit an beiden Haltern angekoppelt ist, werden die Belastungen, die auf jeden Halter einzeln wirken, reduziert. Zudem sind die beiden Erregereinheiten im Bereich zwischen den Haltern besser vor mechanischer Einwirkung geschützt. Vorzugsweise ist es so, dass die beiden Halter quer, insbesondere senkrecht, zur Förderrichtung (V) der Förderstrecke zueinander beabstandet angeordnet sind.

Eine erfindungsgemäße Fördereinrichtung kann beispielsweise dergestalt sein, dass die beiden Halter als Stahlblechteile ausgebildet sind, die an ihrem der Fördereinrichtung abgewandten Bereich mit einer Abkantung und/oder einer Aussteifung abgeschlossen sind. Somit können die Halter gewichtsoptimiert gestaltet sein. Sie bieten dann auch eine ausreichende Festigkeit, um die Vibrationsbewegungen verformungsfrei oder zumindest verformungsarm zu übertragen.

Eine mögliche Erfindungsvariante kann derart sein, dass mehrere, als zueinander beabstandete Rippen ausgebildete Verbindungselemente zwischen den Motor-Statoren angeordnet sind, um die Motor-Statoren stabil miteinander zu koppeln.

Zur Variation und Einstellung der Amplitude der Erregerfrequenz kann es vorgesehen sein, dass der Motor-Rotor wenigstens einer Erregereinheit zwei gegeneinander in Umfangsrichtung der Rotationsachse gegeneinander verstellbare Unwuchtmassen antreibt.

Die Erfindung wird im Folgenden anhand eines in den Zeichnungen dargestellten Ausführungsbeispiels näher erläutert. Es zeigen:
- Figur 1: in schematischer Darstellung eine Materialverarbeitungsanlage 1 mit einem Brechaggregat 10 in Seitenansicht,
- Figur 2: in perspektivischer Frontansicht eine Fördereinrichtung einer Aufgabeeinheit der mobilen Brechanlage gemäß Figur 1,
- Figur 3: die Fördereinrichtung gemäß den Figuren 2 in Ansicht von oben,
- Figur 4: eine weitere Ausgestaltungsvariante einer Fördereinrichtung für eine Materialverarbeitungsanlage in perspektivischer Ansicht von unten,
- Figur 5: die Darstellung gemäß Figur 4 in einer veränderten Perspektive,
- Figur 6 und 7: schematische Darstellungen möglicher Ausgestaltungsvarianten von Erregereinheiten für die Fördereinrichtungen gemäß den Figuren 2 bis 5.

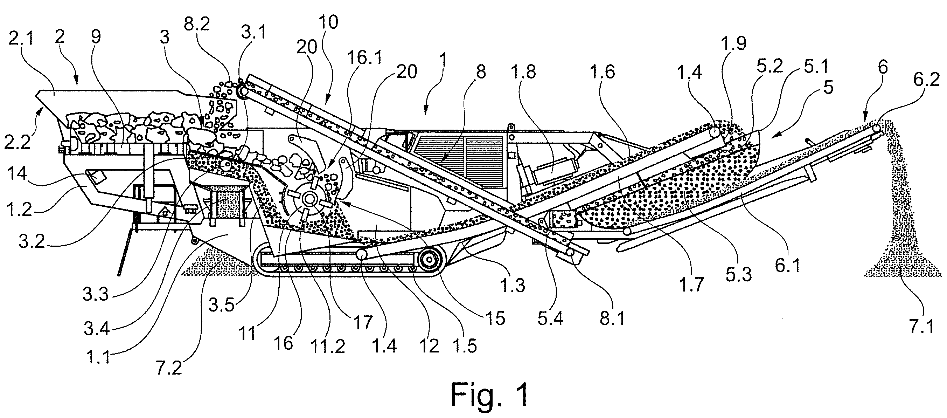

Figur 1 zeigt eine Materialverarbeitungsanlage 1, beispielsweise in Form einer Brechanlage, mit einem Materialverarbeitungsaggregat, beispielsweise in Form eines Brechaggregats 10.

Die Materialverarbeitungsanlage 1 ist als mobile Materialverarbeitungsanlage 1 ausgebildet und weist daher Fahrwerke 1.5 auf. Denkbar ist es jedoch auch, dass es sich bei der Materialverarbeitungsanlage 1 um eine stationäre Materialverarbeitungsanlage 1 handelt.

Die Materialverarbeitungsanlage 1 weist ein Chassis 1.1 auf, welches die Maschinenkomponenten oder zumindest einen Teil der Maschinenkomponenten trägt. An seinem rückwärtigen Ende kann das Chassis 1.1 vorzugsweise einen Ausleger 1.2 aufweisen. Im Bereich des Auslegers 1.2 ist ein Material-Zuführbereich gebildet.

Der Material-Zuführbereich kann einen Aufgabetrichter 2 und eine Materialzuführeinrichtung 9 mit einer Fördereinrichtung umfassen.

Der Aufgabetrichter 2 kann zumindest teilweise von Trichterwänden 2.1, die in Richtung der Längserstreckung der Materialverarbeitungsanlage 1 verlaufen, und einer quer zur Längserstreckung verlaufenden Rückwand 2.2 gebildet sein. Der Aufgabetrichter 2 führt zu der Materialzuführeinrichtung 9.

Die Materialzuführeinrichtung 9 kann, wie im vorliegenden Ausführungsbeispiel dargestellt, eine Fördereinrichtung mit einer Förderanordnung aufweisen, die eine Material-Förderstrecke bildet. Beispielsweise kann die Förderanordnung eine Förderrinne aufweisen.

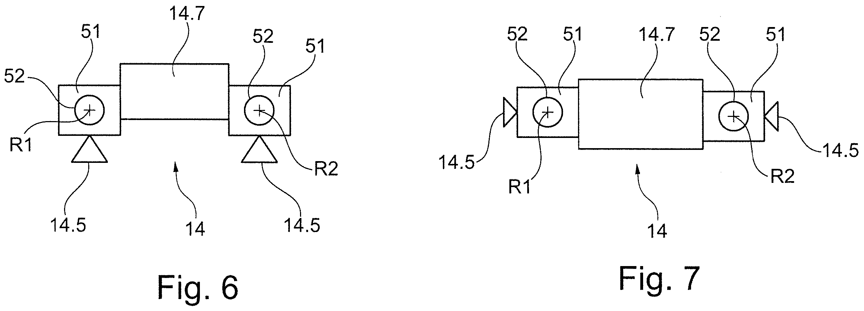

Die Förderanordnung ist mittels eines Vibrationsantriebs antreibbar. Der Vibrationsantrieb umfasst einen Schwingungserreger 14 mit zwei Erregereinheiten 14.1, 14.2, wobei die Erregereinheiten 14.1, 14.2 jeweils einen Erregermotor 50 aufweisen, der mit einem Motor-Rotor 52 jeweils wenigstens eine Unwuchtmasse antreibt (s. Figuren 6 und 7).

An die Förderanordnung ist eine Tragvorrichtung angekoppelt, die die Erregereinheiten trägt, um die Vibrationen der Erregereinheiten 14.1, 14.2 auf die Förderanordnung zu übertragen.

Über den Aufgabetrichter 2 kann, beispielsweise mittels eines Radladers, zu zerkleinerndes Gut in die Materialverarbeitungsanlage 1 eingefüllt und auf die Förderanordnung aufgegeben werden.

Von der Förderanordnung gelangt das zu zerkleinernde Gut in den Bereich einer Siebeinheit 3. Diese Siebeinheit 3 kann auch als Vorsieb-Anordnung bezeichnet werden. Im Bereich der Siebeinheit 3 ist wenigstens ein Siebdeck 3.1, 3.2 angeordnet. Im vorliegenden Ausführungsbeispiel sind zwei Siebdecks 3.1, 3.2 verwendet.

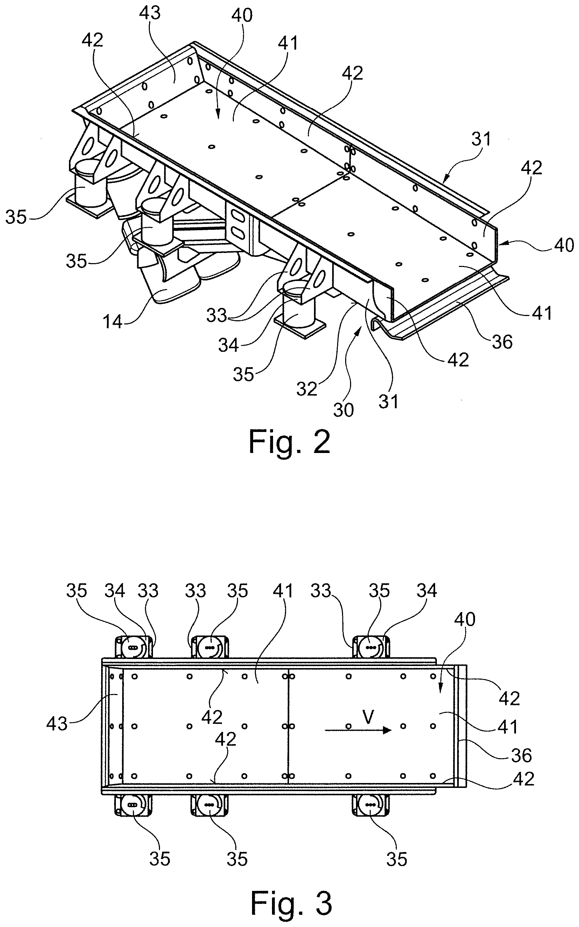

Wie Figur 2 veranschaulicht, kann es so sein, dass die Materialzuführeinrichtung 9 bodenseitig die Förderrinne aufweist, die eine Förderstrecke bildet. Über die Förderstrecke wird das zu zerkleinernde Gut hin zu einer weiteren Anlagenkomponente, insbesondere hin zu der Siebeinheit 3, gefördert.

Der Materialzuführeinrichtung 9 ist der Schwingungserreger 14 zugeordnet. Mit dem Schwingungserreger 14 lässt sich die Materialzuführeinrichtung 9 in Schwingung versetzen, um so das zu bearbeitende Gut in Förderrichtung V zu transportieren.

In der Siebeinheit 3 wird das zugeführte Material einem Siebprozess unterzogen. Das Anlagendesign kann so gewählt sein, dass der Schwingungserreger 14 nicht nur die Materialzuführeinrichtung 9, sondern auch die Siebeinheit 3 in Schwingung versetzt. Dann wird auch in Richtung hin zu einem Brechaggregat 10 eine Transportwirkung in Förderrichtung V erzeugt.

Insbesondere kann in Verbindung mit der geneigten Anordnung der Förderrinne und/oder eines oder mehrerer der Siebdecke 3.1, 3.2 eine Transportwirkung, wie bei einem Vibrationsförderer, erreicht werden.

In den Figuren 2 und 3 ist ein Teil der Materialzuführeinrichtung 9, nämlich die Förderanordnung, in isolierter Teildarstellung gezeigt. Wie diese Darstellungen kenntlich machen, weist die Förderanordnung einen Rinnenträger 30 auf. Der Rinnenträger 30 besitzt einen Boden 32 und daran seitlich angeschlossene und vom Boden 32 aufsteigende Seitenwände 31. Der Boden 32 und/oder die Seitenwände 31 können mit Verschleißschutzeinsätzen 40 ganz oder teilweise belegt sein. Der Verschleißschutzeinsatz 40 kann von Verschleißplatten gebildet sein, die einen Boden 41 bzw. Seitenwände 42 und eine Rückwand 43 bilden. Mit diesen Verschleißplatten überdeckt der Verschleißschutzeinsatz 40 ganz oder teilweise den Boden 32 und die Seitenwände 31 des Rinnenträgers 30.

Im Bereich der Seite und/oder der Unterseite der Förderanordnung können Versteifungsrippen 33 vorgesehen sein. Die Versteifungsrippen 33 können vorzugsweise so ausgebildet sein, dass sie den Boden 32 untergreifen und zumindest teilweise auch über die Seitenwände 31 geführt sind. Vorzugsweise sind die Versteifungsrippen 33 sowohl mit dem Boden 32 als auch mit den Seitenwänden 31 verschweißt. Figur 2 macht deutlich, dass jeweils zwei benachbarte Versteifungsrippen 33 U-förmig miteinander verbunden sein können.

Die beiden benachbarten Versteifungsrippen 33 sind mit einem Flansch 34 verbunden. Dieser Flansch 34 dient zur Ankopplung eines Schwingungselements 35, welches beispielsweise von einer Feder gebildet sein kann. Mittels der Schwingungselemente 35 ist die Materialzuführeinrichtung 9 gegenüber dem Chassis 1.1 unmittelbar oder mittelbar abgestützt.

Die Förderrichtung V ist beispielsweise in Figur 3 markiert und verläuft längs des Bodens 32 von der Rückwand 43 der Förderanordnung hin zu einem am gegenüberliegenden Ende der Förderanordnung angeordneten Überbrückungsstück 36, welches die Förderrinne in die Siebeinheit 3 überleitet.

An dem oberen Siebdeck 3.1 wird von dem zu zerkleinernden Material eine Teilfraktion ausgesiebt. Diese Teilfraktion hat bereits eine ausreichende Korngröße, die nicht mehr in der Materialverarbeitungsanlage 1 zerkleinert werden muss. Insofern kann diese ausgesiebte Teilfraktion in einem Bypasskanal 3.5 vorbei an dem Brechaggregat 10 geleitet werden.

Wenn ein zweites Siebdeck 3.2 in der Siebeinheit 3 verwendet ist, so kann aus der Teilfraktion, die unterhalb des Siebdecks 3.1 anfällt, eine weitere Feinpartikel-Fraktion ausgesiebt werden. Diese Feinpartikel-Fraktion kann unterhalb des Siebdecks 3.2 zu einem Seitenaustragband 3.4 geführt werden. Von dem Seitenaustragband 3.4 wird die Feinpartikel-Fraktion abgeleitet und auf eine seitlich der Maschine angeordnete Halde 7.2 gefördert.

Wie Figur 1 veranschaulicht, kann es sich bei der Siebeinheit 3 um ein Vibrationssieb mit einem Siebantrieb 3.3 handeln. Der Siebantrieb 3.3 versetzt das Siebdeck 3.1 und/oder das Siebdeck 3.2 in Vibrationsbewegungen. Aufgrund der geneigten Anordnung der Siebdecks 3.1, 3.2 und in Verbindung mit den Vibrationsbewegungen wird ein Materialtransport auf den Siebdecks 3.1, 3.2 hin in Richtung zu dem Brechaggregat 10 bzw. zu dem Bypasskanal 3.5 bewirkt.

Das von dem Siebdeck 3.1 kommende zu zerkleinernde Material wird dem Brechaggregat 10 zugeleitet, wie dies Figur 1 erkennen lässt.

Das Brechaggregat 10 kann beispielsweise in Form eines Rotationsprall-Brechaggregats oder eines Backenbrechaggregats ausgebildet sein. Ist wie in Figur 1 ein Rotationsprall-Brechaggregat verwendet, so weist es beispielsweise einen Schlagrotor 11 auf, der von einem Motor, insbesondere einem Verbrennungsmotor 12, angetrieben wird. In Figur 1 verläuft die Rotationsachse 17 des Schlagrotors 11 horizontal in Richtung der Bildtiefe. Der Schlagrotor 11 ist in einem Brechraum 16.1 untergebracht.

Ist ein Backenbrechaggregat verwendet, so sind zwei Brechbacken einander gegenübergestellt, die zwischen sich einen konvergierenden Brechschacht einschließen, der bis hin zu einem Brechspalt führt. Zumindest eine der Brechbacken kann von dem Motor 12 angetrieben werden, um im konvergierenden Brechspalt 15 das eingefüllte Brechgut zu brechen.

Der Schlagrotor 11 kann beispielsweise an seinem Außenumfang mit Schlagleisten 11.2 bestückt sein. Gegenüberliegend dem Schlagrotor 11 können beispielsweise Wandelemente, vorzugsweise in Form von Prallschwingen 20, angeordnet sein. Bei drehendem Schlagrotor 11 wird das zu zerkleinernde Material mittels der Schlagleisten 11.2 nach außen geschleudert. Dabei trifft dieses Material auf die Prallschwingen 20 und wird aufgrund der hohen kinetischen Energie zerkleinert. Wenn das zu zerkleinernde Material eine ausreichende Korngröße aufweist, die es ermöglicht, dass die Materialteilchen durch einen Brechspalt 15 zwischen den Prallschwingen 20 und den radial äußeren Enden der Schlagleisten 11.2 hindurchgeführt werden können, so verlässt das zerkleinerte Gut das Brechaggregat 10 über den Brecherauslass 16.

Denkbar ist es, dass im Bereich des Brecherauslasses 16 das vom Brechaggregat 10 kommende und zerkleinerte Material mit dem aus dem Bypasskanal 3.5 kommenden Material zusammengeführt und auf einen Bandförderer 1.3 gebracht wird. Mit dem Bandförderer 1.3 kann das Material aus dem Arbeitsbereich des Brechaggregats 10 herausgeführt werden.

Wie die Zeichnungen zeigen, kann der Bandförderer 1.3 ein endlos umlaufendes Förderband aufweisen, das einen Lasttrum 1.6 und einen Leertrum 1.7 aufweist. Der Lasttrum 1.6 dient dazu das gebrochene Material, welches aus dem Brecherauslass 16 des Brechaggregats 10 fällt, aufzufangen und abzutransportieren. An den Bandenden kann das Förderband zwischen dem Lasttrum 1.6 und dem Leertrum 1.7 mittels Umlenkrollen 1.4 umgelenkt werden. Im Bereich zwischen den Umlenkrollen 1.4 können Führungen, insbesondere Tragrollen vorgesehen sein, um die Förderrichtung des Förderbands zu verändern, dem Förderband eine bestimmte Form zu geben und/oder das Förderband zu stützen.

Der Bandförderer 1.3 weist einen Bandantrieb auf, mittels dem der Bandförderer 1.3 angetrieben werden kann. Der Bandantrieb kann vorzugsweise am Abwurfende 1.9 oder im Bereich des Abwurfendes 1.9 des Bandförderers 1.3 angeordnet sein.

Der Bandförderer 1.3 kann, beispielsweise mittels des Bandantriebs, an eine Steuereinrichtung mittels einer Steuerleitung angeschlossen sein.

Es können ein oder mehrere weitere Bandförderer 6 und/oder ein Rückführförderer 8 verwendet sein, die prinzipiell die gleiche Bauweise aufweisen wie der Bandförderer 1.3. Insofern kann auf die vorstehenden Ausführungen Bezug genommen werden.

Im Bereich zwischen dem Aufgabeende und dem Abwurfende 1.9 kann ein Magnet 1.8, insbesondere ein Elektromagnet, oberhalb des Lasttrums 1.6 angeordnet sein. Mit dem Magnet 1.8 lassen sich Eisenteile aus dem gebrochenen Gut abheben und aus dem Förderbereich des Bandförderers 1.3 heraus bewegen.

In Transportrichtung nach dem Bandförderer 1.3 kann eine Nachsiebvorrichtung 5 angeordnet sein. Die Nachsiebvorrichtung 5 weist ein Siebgehäuse 5.1 auf, in dem wenigstens ein Siebdeck 5.2 untergebracht ist. Unterhalb des Siebdecks 5.2 ist ein Gehäuseunterteil 5.3 gebildet, welcher als Sammelraum für das am Siebdeck 5.2 ausgesiebte Material dient.

Das Gehäuseunterteil 5.3 schafft über eine Öffnung eine räumliche Verbindung zu einem weiteren Bandförderer 6. Hier bildet der weitere Bandförderer 6 seinen Aufgabebereich 6.1, wobei das ausgesiebte Material im Aufgabebereich 6.1 auf den Lasttrum des weiteren Bandförderers 6 geleitet wird. Der weitere Bandförderer 6 fördert das ausgesiebte Material hin zu seinem Abwurfende 6.2. Von dort gelangt das ausgesiebte Material auf eine Halde 7.1.

Das am Siebdeck 5.2 der Nachsiebvorrichtung 5 nicht ausgesiebte Material wird vom Siebdeck 5.2 auf ein Stichband 5.4 gefördert. Das Stichband 5.4 kann ebenfalls als ein Bandförderer ausgebildet sein, sodass auf die oben in Bezug auf den Bandförderer 1.3 gemachten Ausführungen verwiesen werden kann. Die Transportrichtung des Stichbands 5.4 verläuft in Figur 1 in Richtung der Bildtiefe.

An seinem Abwurfende übergibt das Stichband 5.4 das nicht ausgesiebte Material, das auch als Überkorn bezeichnet wird, auf einen Aufgabebereich 8.1 des Rückführförderers 8. Der Rückführförderer 8, der als Bandförderer ausgebildet sein kann, fördert das Überkorn in Richtung hin zum Aufgabetrichter 2. An seinem Abwurfende 8.2 übergibt der Rückführförderer 8 das Überkorn in den Materialfluss, insbesondere in den Material-Zuführbereich. Das Überkorn kann mithin dem Brechaggregat 10 erneut zugeführt und hier auf die gewünschte Partikelgröße gebrochen werden.

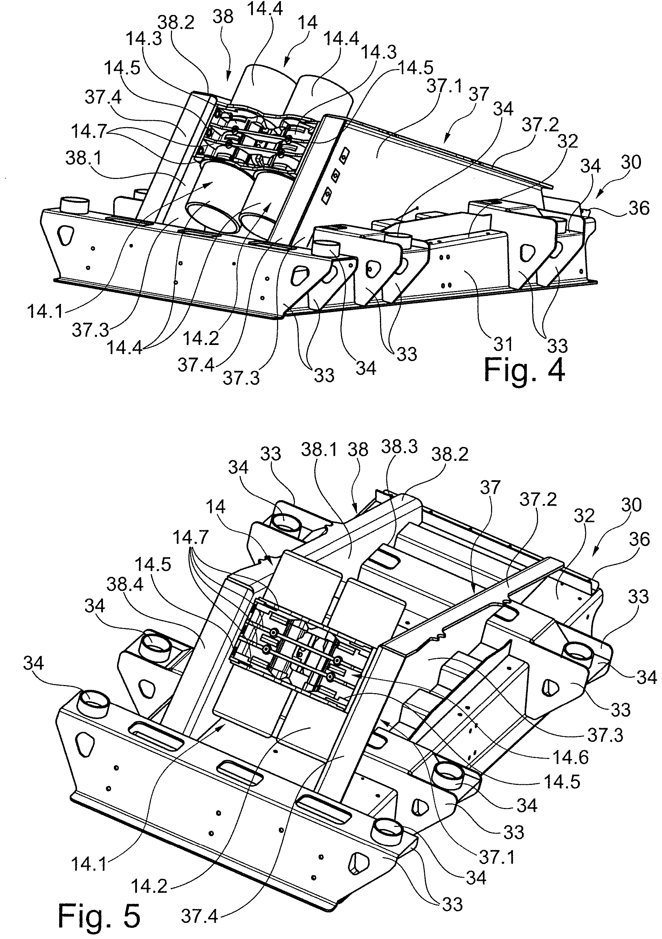

In den Figuren 4 und 5 ist eine weitere Ausführungsform einer erfindungsgemäßen Fördereinrichtung gezeigt. Gleiche Bauteile sind mit gleichen Bezugszeichen versehen, sodass auf die vorstehenden Ausführungen Bezug genommen werden kann und nachstehend nur die Unterschiede näher erläutert werden.

Wie die Zeichnungen zeigen, weist die Förderanordnung der Fördereinrichtung wieder einen Rinnenträger 30 mit einem Boden 32 und daran angeschlossenen Seitenwänden 31 auf. Der Boden 32 ist mittels Versteifungsrippen 33 unterfangen, die sich seitlich über den Boden 32 hinaus erstrecken. Die Versteifungsrippen 33 sind paarweise mittels Flanschen 34 zusammengefasst, wobei die Flansche 34 Befestigungsstellen für die Schwingungselemente 35 bieten.

Die Zeichnungen zeigen weiter, dass an dem Boden 32 Halter 37 und 38 befestigt sind. Diese Halter 37, 38 besitzen jeweils einen Halteabschnitt 37.1, 38.1. Mittels dieser Halteabschnitte 37.1, 38.1 sind die Halter 37, 38 mit dem Rinnenträger 30 verbunden. Die Halter 37, 38 sind als Blechteile ausgebildet. Gegenüberliegend dem Halteabschnitt 37.1, 38.1 sind die Halter 37, 38 mittels Abkantungen 37.2, 38.2 abgeschlossen. Die Abkantungen 37.2, 38.2 können dabei entweder einteilig von dem Halteabschnitt 37.1,38.1 abgewinkelt sein oder es ist denkbar, dass die Abkantungen 37.2 38.2 als separate Blechteile hergestellt und mit dem Halteabschnitt 37.1, 38.1 verschweißt sind.

Vorzugsweise sind die Abkantungen 37.2, 38.2 in die einander entgegengesetzten Richtungen nach außen ausgestellt, wie Figur 5 zeigt. An seinem in Förderrichtung V vorderen Endbereich (das ist in Figur 4 die linke Seite) ist eine Aussteifung 37.4, 38.4 verwendet, die mit dem Halteabschnitt 37.1, 38.1 verbunden, vorzugsweise einteilig verbunden ist. Die Aussteifung 37.4, 38.4 kann ebenfalls in Form einer Abkantung ausgeführt sein. Vorzugsweise ist es so, dass eine Aussteifung 37.4, 38.4 an ihrem einen längsseitigen Ende auf ein längsseitiges Ende der zugeordneten Abkantung 37.2, 38.2 trifft. Hier können dann diese beiden Bauteile miteinander verbunden, vorzugsweise verschweißt sein, um eine verbesserte Steifigkeit zu erreichen.

Die beiden Halter 37, 38 stehen zueinander beabstandet an der Unterseite der Förderanordnung vor und bilden einen Teil einer Tragvorrichtung. An dieser Tragvorrichtung kann der in den Figuren 4 und 5 gezeigte Schwingungserreger 14 angebaut werden.

Der Schwingungserreger 14 kann dergestalt sein, dass er ein Motorgehäuse 14.3 aufweist. Das Motorgehäuse 14.3 besitzt zwei Gehäuseteile, in denen jeweils ein Erregermotor 50 (siehe beispielsweise Figur 7) untergebracht ist.

Die Erregermotoren 50 können als Elektromotoren ausgebildet sein und einen Motor-Stator 51 und einen Motor-Rotor 52 aufweisen. Vorzugsweise ist es so, dass der Elektromotor als Innenläufermotor ausgebildet ist. Der Motor-Rotor 52 ist um eine Rotationsachse R1, R2 drehbar gelagert.

Die beiden Erregermotoren 50 treiben unabhängig voneinander jeweils eine Welle an, die in Richtung der Rotationsachse R1, R2 über den Motor-Stator 51 vorsteht. Denkbar ist es auch, dass der Erregermotor 50 zwei Wellen antreibt, die jeweils an gegenüberliegenden Seiten über den Motor-Stator 51 vorstehen. Die Welle oder die Wellen tragen jeweils wenigstens eine Unwuchtmasse, sodass der Erregermotor 50 im Bereich zwischen den Unwuchtmassen angeordnet ist.

Jeder Erregermotor 50 bildet zusammen mit der oder den Unwuchtmassen jeweils eine Erregereinheit 14.1, 14.2 des Schwingungserregers 14.

Aus Gründen der Betriebssicherheit können die Unwuchtmassen mittels Abdeckungen 14.4 überdeckt sein, die mit dem Motorgehäuse 14.3 verbunden sind.

Ausweislich den Figuren 4 und 5 sind die Motor-Statoren 51 mittelbar, nämlich über Verbindungselemente 14.7 des Motorgehäuses 14.3 miteinander verbunden. Die Verbindungselemente 14.7 bilden Überbrückungsbereiche, die den Abstandsbereich zwischen den Motor-Statoren 51 zumindest bereichsweise überbrücken.

Das Motorgehäuse 14.3 kann vorzugsweise so ausgebildet sein, dass es an gegenüberliegenden Seiten Befestigungsabschnitte 14.5 aufweist. Die Befestigungsabschnitte 14.5 können beispielsweise Befestigungsflansche bilden. Die Halter 37, 38 weisen an den einander zugewandten Seiten der Halteabschnitte 37.1, 38.1 Befestigungsbereiche auf, mit denen die Befestigungsabschnitte 14.5 und damit das Motorgehäuse 14.3 verbunden ist.

Figur 4 und 5 zeigt, dass es vorteilhafterweise so ist, dass die beiden Erregereinheiten 14.1, 14.2 im Bereich zwischen den Haltern 37, 38 geschützt untergebracht sind.

Die in den Figuren 4 und 5 gezeigte Gestaltung ist schematisch in Figur 7 noch einmal gezeigt. Wie diese Darstellung veranschaulicht, kann es vorzugsweise so sein, dass die Motor-Statoren 51 der beiden Erregermotoren 50 zueinander im Abstand stehen. Der Bereich zwischen den beiden Motor-Statoren 51 ist mittels eines Verbindungselements 41.7 überbrückt. Dabei ist der Verbindungsabschnitt 14.7 entweder mittelbar oder unmittelbar mit den Motor-Statoren 51 verbunden. Vorzugsweise kann es so sein, wie oben erwähnt, dass der Verbindungsabschnitt 14.7 Teil eines Gehäuses, insbesondere eines Motorgehäuses 14.3 ist, der die Motor-Statoren 51 miteinander verbindet. Die in Figur 7 gezeigte Erregereinheit 14 entspricht somit im Wesentlichen dem Aufbau der Erregereinheit 14, wie er in den Figuren 4 und 5 gezeigt ist.

Figur 6 zeigt einen alternativen Aufbau einer Erregereinheit 14. Wie diese Darstellung veranschaulicht, sind wieder zwei Erregermotoren 50 mit jeweils einem Motor-Stator 51 und eine Motor-Rotor 52 verwendet. An den Motor-Stator 51 ist jeweils ein Befestigungsabschnitt 14.5 mittelbar oder unmittelbar angekoppelt. Die im Abstand zueinander angeordneten Motor-Statoren 51 sind mittelbar oder unmittelbar mittels des Befestigungsabschnitts 14.7 verbunden.

Wie Figur 6 zeigt, sind im Gegensatz zur Figur 7 die Erregereinheit 14 nicht zwischen den Befestigungsabschnitten 14.5 eingefasst (siehe Figur 7), sondern die beiden Befestigungsabschnitte 14.5 sind im Bereich einer Seite der Erregereinheit 14 angeordnet. Somit können in diesem Ausführungsbeispiel die Befestigungsabschnitte 14.5 gemeinsam an eine Platte eines entsprechend ausgebildeten Trägers der Traganordnung angeschlossen werden. Denkbar ist es hier auch, dass die beiden Befestigungsabschnitte 14.5 zu einem einheitlichen Befestigungsabschnitt 14.5 zusammengefasst sind.

## Patentansprüche

1. Fördereinrichtung für eine Materialverarbeitungsanlage (1) mit einer Förderanordnung, die eine Material-Förderstrecke bildet, wobei an die Förderanordnung eine Tragvorrichtung angekoppelt ist, wobei die Tragvorrichtung einen Schwingungserreger (14) mit zwei Erregereinheiten (14.1, 14.2), trägt, wobei die Erregereinheiten (14.1, 14.2) jeweils einen Erregermotor (50) aufweisen, der mit einem Motor-Rotor (52) jeweils wenigstens eine Unwuchtmasse antreibt, wobei die Erregereinheiten (14.1, 14.2) mittels eines Befestigungsabschnitts (14.5) an der Tragvorrichtung zur Schwingungsübertragung befestigt ist,
**dadurch gekennzeichnet,**
**dass** die Motor-Statoren (51) der beiden Erregermotoren (50) mittels wenigstens einem Verbindungselement (14.7) miteinander verbunden sind, wobei das Verbindungselement (14.7) einen Überbrückungsbereich bildet, der den Abstandsbereich zwischen den Motor-Statoren (51) überbrückt.

2. Fördereinrichtung nach Anspruch 1, **dadurch gekennzeichnet, dass** wenigstens eine der Rotationsachsen (R1, R2), vorzugsweise beide Rotationsachsen (R1, R2), der Motor-Rotoren (52) zumindest abschnittsweise in dem zwischen dem Befestigungsabschnitt (14.5) und dem Überbrückungsbereich des wenigstens einen Verbindungselements (14.7) gebildeten Abstandsbereich angeordnet ist, und/oder dass der Überbrückungsbereich des wenigstens einen Verbindungselements (14.7) zumindest abschnittsweise im Bereich zwischen den Rotationsachsen (R1, R2) der Motor-Rotoren (52) angeordnet ist, und/oder dass die beiden Rotationsachsen (R1, R2) der Motor-Rotoren (52) im Bereich zwischen den beiden Befestigungsabschnitten (14.5) angeordnet sind.

3. Fördereinrichtung nach Anspruch 1 oder 2, **dadurch gekennzeichnet, dass** der Erregermotor (50) wenigstens einer der Erregereinheiten (14.1, 14.2) zwei zueinander in Richtung der Rotationsachse (R1, R2) des Motor-Rotors (52) beabstandet angeordnete Unwuchtmassen antreibt, wobei der Motor-Rotor (52) in Richtung der Rotationsachse (R1, R2) zumindest bereichsweise zwischen den beiden Unwuchtmassen angeordnet ist.

4. Fördereinrichtung nach Anspruch 3, **dadurch gekennzeichnet, dass** die Projektion des Überbrückungsbereichs des wenigstens einen Verbindungselements (14.7) in eine die Rotationsachse aufnehmende Ebene zumindest abschnittsweise im Bereich zwischen den beiden in Richtung der Rotationsachse (R1, R2) zueinander beabstandeten Unwuchtmassen angeordnet ist.

5. Fördereinrichtung nach einem der Ansprüche 1 bis 4, **dadurch gekennzeichnet, dass** die beiden Erregermotoren (50) Elektromotoren sind, die jeweils unabhängig voneinander die ihnen jeweils zugeordnete wenigstens eine Unwuchtmasse antreiben.

6. Fördereinrichtung nach einem der Ansprüche 1 bis 5, **dadurch gekennzeichnet, dass** das wenigstens eine Verbindungselement (14.7) Teil eines Gehäuses ist, in dem die beiden Erregermotoren (50) zumindest bereichsweise untergebracht und gehalten sind.

7. Fördereinrichtung nach Anspruch 6, **dadurch gekennzeichnet, dass** das Gehäuse die von den Unwuchtmassen beider Erregereinheiten (14.1, 14.2) erzeugten Kräfte aufnimmt.

8. Fördereinrichtung nach einem der Ansprüche 1 bis 7, **dadurch gekennzeichnet, dass** die Tragvorrichtung zwei zueinander beabstandet angeordnete Halter (37, 38) aufweist, zwischen denen die beiden Erregereinheiten (14.1, 14.2) zumindest bereichsweise angeordnet sind und an denen der Schwingungserreger (14) abgestützt, vorzugsweise befestigt, ist.

9. Fördereinrichtung nach Anspruch 8, **dadurch gekennzeichnet, dass** der Schwingungserreger (14) an gegenüberliegenden Seiten die als Befestigungsflansche ausgebildeten und einander abgewandten Befestigungsabschnitte (14.5) aufweist, und dass jeder der Befestigungsflansche an einem Halterabschnitt (37.1, 38.1) des zugeordneten Halters (37, 38) angekoppelt ist

10. Fördereinrichtung nach Anspruch 8 oder 9, **dadurch gekennzeichnet, dass** die Halter (37, 38) der Tragvorrichtung mittels Koppelstücken (37.3, 38.3) an einen Boden (32) eines Rinnenträgers (30) der Förderanordnung angekoppelt sind, wobei die Koppelstücke (37.3, 38.3) quer zur Förderrichtung der Förderstrecke zueinander beabstandet angeordnet sind.

11. Fördereinrichtung nach einem der Ansprüche 8 bis 10, **dadurch gekennzeichnet, dass** die beiden Halter (37, 38) als Stahlblechteile ausgebildet sind, die an ihrem der Fördereinrichtung abgewandten Bereich mit einer Abkantung (37.2, 38.2) und/oder einer Aussteifung (37.4, 38.4) abgeschlossen sind.

12. Fördereinrichtung nach einem der Ansprüche 1 bis 11, **dadurch gekennzeichnet, dass** die Fördereinrichtung einen/den Rinnenträger (30) aufweist, an dessen Boden (32) die Tragvorrichtung angeschlossen ist, dass der Rinnenträger (30) Schwingungselement (35) trägt, zur Abstützung der Fördereinrichtung an einem Chassis der Materialverarbeitungsanlage (1).

13. Fördereinrichtung nach einem der Ansprüche 1 bis 12, **dadurch gekennzeichnet, dass** mehrere, als zueinander beabstandete Rippen ausgebildete Verbindungselemente (14.7) zwischen den Motor-Statoren angeordnet sind.

14. Fördereinrichtung nach einem der Ansprüche 1 bis 13, **dadurch gekennzeichnet, dass** der Motor-Rotor (53) wenigstens einer Erregereinheit (14.1, 14.2) zwei gegeneinander in Umfangsrichtung der Rotationsachse (R1, R2) gegeneinander verstellbare Unwuchtmassen antreibt.
